# FASCICULE DE BREVET EUROPEEN

(11) **EP 3 029 640 B1**
(45) Date de publication et mention de la délivrance du brevet: **08.05.2019**
(21) Numéro de dépôt: 15197365.8
(22) Date de dépôt: 01.12.2015
(51) Int. Cl.: G07F 7/08, H04M 1/725, G06Q 20/32, G06F 1/16

(54) **TRAPPE POUR DISPOSITIF DE PAIEMENT COMPRENANT UN TERMINAL DE PAIEMENT ET UN LOGEMENT DE MAINTIEN D'UN TERMINAL DE COMMUNICATION**
KLAPPE FÜR ZAHLUNGSVORRICHTUNG, DIE EIN ZAHLUNGSTERMINAL UND EINEN WARTUNGSRAUM FÜR DAS KOMMUNIKATIONSENDGERÄT UMFASST
HATCH FOR PAYMENT DEVICE COMPRISING A PAYMENT TERMINAL AND A RECESS FOR SUPPORTING A COMMUNICATION TERMINAL

(30) Priorité: 01.12.2014 FR 1461744
(43) Date de publication de la demande: 08.06.2016
(73) Titulaire: Ingenico Group, 75015 Paris (FR)
(72) Inventeur: FROMENT, Marion, 26270 LORIOL (FR); DEDIEU, Philippe, 07500 GUILHERAND-GRANGES (FR); BARNERON, Sylvain, 26500 Bours-Les-Valence (FR)
(74) Mandataire: Vidon Brevets & Stratégie

(56) Documents cités:
- EP-A1- 1 732 291
- EP-A2- 1 225 501
- WO-A1-2010/024923
- WO-A1-2014/058620
- US-A1- 2004 058 705
- US-A1- 2013 021 164
- US-A1- 2013 128 449
- US-A1- 2013 262 299
- US-A1- 2014 347 815

## Description

### 1. Domaine

La divulgation concerne les dispositifs de paiement autonomes et nomades, qui échangent des données avec un ou plusieurs serveurs distants via un ou plusieurs réseaux de communication accessibles par exemple à partir d'un terminal de communication.

Plus précisément, la divulgation concerne une trappe destinée à équiper un tel dispositif de paiement et permettant le maintien d'un terminal de communication dans un logement dédié.

### 2. Art antérieur

De nombreux professionnels, tels que les chauffeurs de taxi ou les médecins, sont amenés à se déplacer dans le cadre de leur travail quotidien. Ces professionnels ont exprimé le besoin de disposer de dispositifs de paiement mobiles et autonomes, leur permettant notamment de facturer les services dispensés lors de leurs interventions en situation de mobilité. En réponse à ce besoin, certains dispositifs de paiement utilisent un réseau de communication utilisé par des terminaux de communications. De tels terminaux de communication se présentent par exemple sous la forme de terminal de communications intelligents (smartphones) ou encore de tablettes numériques.

Dans certains cas, le dispositif de paiement mobile comprend notamment un terminal de paiement muni d'un lecteur de carte bancaire, ainsi que d'un logement apte à recevoir un terminal de communication. Ce terminal de communication permet ainsi au terminal de paiement de communiquer avec un serveur distant.

Une trappe est agencée en vis-à-vis de l'accès au logement du terminal de communication, de manière à pouvoir en bloquer l'accès et ainsi, assurer une fixation sécurisée du terminal de communication au terminal de paiement.

Dans des dispositifs de paiement connus, cette trappe est montée de manière amovible sur le terminal de paiement, au moyen d'éléments de fixation répondant à un seuil de contrainte d'actionnement prédéfini. La valeur de ce seuil est en général définie de manière à correspondre à l'effort moyen fourni par un utilisateur lors des étapes d'assemblage et de désassemblage de la trappe et du terminal de paiement. D'un point de vue mécanique, le caractère amovible de la fixation réside dans la mise en oeuvre d'éléments de liaison aptes à se déformer élastiquement, de manière à pouvoir passer d'une position d'assemblage à une position de désassemblage, et vice-versa.

Dans la pratique, de tels éléments de fixation sont souvent soumis à des sollicitations fréquemment répétées, ce qui tend à fragiliser leur structure et, à terme, à provoquer leur rupture. Le cas échéant, la fixation de la trappe au terminal de paiement n'est plus assurée de manière satisfaisante, d'où une réduction notable de la durabilité de cette trappe et, de manière générale, de l'ensemble du dispositif de paiement.

### 3. Résumé

Les revendications 1, 7 divulguent l'invention. Les revendications 2-6 divulguent des modes particuliers de réalisation de cette invention. La technique proposée ne présente pas ces inconvénients de l'art antérieur. Plus particulièrement, dans un moins un mode de réalisation, la technique proposée se rapporte à une trappe pour dispositif de paiement comprenant un terminal de paiement et un logement de maintien d'un terminal de communication. Cette trappe est caractérisée en ce qu'elle comprend :
- une armature de blocage d'un accès audit logement de maintien d'un terminal de communication,
- un dispositif de verrouillage comprenant au moins :
- une partie d'actionnement,
- une partie de verrouillage.

Ladite partie d'actionnement et ladite partie de verrouillage sont respectivement mobiles par rapport à ladite armature entre une position de verrouillage et une position de déverrouillage.

L'expression « terminal de paiement » telle qu'utilisée dans la description désigne un dispositif électronique capable de lire les données d'une carte bancaire et de réaliser une transaction bancaire. Ce terminal de paiement communique par exemple via un « terminal de communication » avec un serveur distant. Le terme « verrouillage » désigne le processus par lequel l'armature est fixée au terminal de paiement, de manière à empêcher le désassemblage de ces derniers par un utilisateur. L'expression « dispositif de verrouillage » désigne un ensemble formé d'une seule ou d'une pluralité de pièces mécaniques, ayant une fonction de verrouillage. Le terme « partie » désigne une fraction de cet ensemble - ou en d'autre termes : une portion de pièce mécanique ou une pluralité de pièces comprises dans cet ensemble - ayant une fonction déterminée.

Une trappe selon la divulgation a pour avantage de pouvoir adopter une position de verrouillage, dans laquelle cette trappe ne peut pas être désolidarisée du terminal de paiement, sans la conduite par un utilisateur d'une action de déverrouillage distincte du processus de désassemblage. La capacité de verrouillage de la trappe au terminal de paiement n'est donc pas affectée dans le temps par la récurrence des processus d'assemblage et de désassemblage, ce qui garantit une fiabilité satisfaisante de la fixation de la trappe au terminal de paiement, tant pour ce qui est de la durabilité que pour ce qui est de la qualité de l'assemblage.

Selon une caractéristique particulière, ladite partie d'actionnement est mobile en coulissement par rapport à ladite armature.

Une telle partie d'actionnement peut donc avantageusement être mise en oeuvre dans une trappe ayant une bonne compacité.

Selon une caractéristique particulière, ladite partie d'actionnement et ladite partie de verrouillage sont mobiles selon des trajectoires non parallèles entre elles.

Le terme « trajectoire » tel qu'utilisé dans la description désigne le chemin emprunté par une partie du dispositif de verrouillage lors de son déplacement, que ce chemin soit rectiligne ou non. Cette caractéristique particulière a pour avantage d'offrir une grande liberté de conception du dispositif de verrouillage, dans une optique d'optimisation de la compacité de la trappe.

Selon une caractéristique particulière, ladite armature comprend une partie de déviation angulaire d'une portion dudit dispositif de verrouillage.

L'expression « déviation angulaire » qualifie une partie ayant pour fonction d'éloigner une portion dudit dispositif de verrouillage de sa trajectoire initiale, selon un angle déterminé. Cette caractéristique particulière a pour avantage de rendre moins complexe la structure du dispositif de verrouillage, ce dernier n'étant pas nécessairement pourvu d'un mécanisme de déviation angulaire.

Selon une caractéristique particulière, ladite partie de déviation angulaire forme saillie sur une paroi interne de ladite armature, et comprend une portion biseautée destinée à former une butée avec une portion dudit dispositif de verrouillage.

Un tel mécanisme de déviation angulaire a pour avantage d'être compact et non complexe.

Selon une caractéristique particulière, ladite partie d'actionnement comprend un orifice destiné à recevoir un élément d'actionnement de forme complémentaire.

La présence d'un tel orifice permet de restreindre l'utilisation du dispositif de verrouillage aux seuls utilisateurs disposant de l'élément d'actionnement de forme complémentaire. Cette caractéristique confère donc une sécurité supplémentaire au verrouillage de la trappe sur le terminal de paiement.

Selon une caractéristique particulière, ledit orifice présente une forme complémentaire de la portion active d'un outil d'éjection de carte SIM.

Selon une caractéristique particulière, ladite partie de verrouillage comprend un ergot de verrouillage, destiné à être inséré dans un évidement de forme complémentaire ménagé dans ledit terminal.

Cette caractéristique particulière permet la mise en oeuvre d'une partie de verrouillage qui soit non complexe et compacte.

Selon une caractéristique particulière, ledit dispositif de verrouillage comprend une pluralité de parties de verrouillage.

La mise en oeuvre d'au moins deux parties de verrouillage permet de répartir les contraintes mécaniques, liées au verrouillage de la trappe sur le terminal de paiement, sur un plus grand nombre de pièces. Les parties de verrouillage sont donc moins sollicitées individuellement, ce qui confère une durabilité supérieure au dispositif de verrouillage.

Selon une caractéristique particulière, ledit dispositif de verrouillage comprend une pièce mécanique monobloc comprenant ladite partie d'actionnement et ladite partie de verrouillage.

Le terme « monobloc » tel qu'utilisé dans la description qualifie un ensemble formé d'une seule pièce et non d'un assemblage permanent ou temporaire de pièces mécaniques. Une telle pièce monobloc peut être fabriquée selon des procédés industriels économiques à grande échelle et mis en oeuvre à des cadences élevées, tout en présentant une résistance satisfaisante aux contraintes mécaniques.

Selon une caractéristique particulière, ledit dispositif de verrouillage comprend :
- une partie d'actionnement comprenant une lame centrale perforée en son centre, ladite lame centrale étant montée affleurant et en coulissement avec une paroi interne de ladite armature, et étant apparente au niveau de sa portion centrale,
- deux parties de verrouillage comprenant chacune un crochet solidarisé à une extrémité longitudinale de ladite lame centrale, dont l'ergot de verrouillage s'étend selon une direction distale de ladite paroi interne.

Le terme « apparent » tel qu'utilisé dans la description qualifie une partie visible depuis l'extérieur de l'armature. À titre d'exemple non limitatif, une telle partie peut être agencée en vis-à-vis d'une lumière ménagée dans ladite armature. Un tel dispositif de verrouillage a pour avantages d'être compact, non complexe, ergonomique et économique.

Selon une caractéristique particulière, ladite trappe comprend un dispositif de fixation amovible autonome de ladite trappe sur ledit terminal de paiement.

Le terme « autonome » tel qu'utilisé dans la description qualifie une fixation mise en place lors de l'agencement de la trappe sur le terminal, sans qu'une action complémentaire de l'utilisateur ne soit nécessaire. Une telle fixation est amovible. Un utilisateur peut donc y mettre fin en exerçant un effort mécanique selon la direction de désassemblage du dispositif de paiement. La mise en oeuvre d'un tel dispositif de fixation amovible autonome permet lors de la phase d'assemblage de conserver un positionnement adéquat de la trappe sur le terminal de paiement, le temps pour un utilisateur de procéder au verrouillage de cette dernière. Une fois le dispositif de paiement assemblé et verrouillé, le dispositif de fixation amovible travaille de concert avec le dispositif de verrouillage pour absorber les contraintes mécaniques exercées au niveau de la liaison entre la trappe et le terminal de paiement. Le dispositif de fixation amovible et le dispositif de verrouillage contribuent ainsi respectivement à améliorer la durabilité de l'autre. De manière générale, ces deux dispositifs permettent l'obtention d'une fixation de fiabilité supérieure entre la trappe et le terminal de paiement.

Selon une caractéristique particulière, ledit dispositif de fixation amovible comprend une lame recourbée flexible destinée à venir en butée avec une partie dudit terminal de paiement.

Un tel dispositif de fixation amovible a pour avantages d'être compact, non complexe, ergonomique et économique.

La divulgation concerne également un dispositif de paiement caractérisé en ce qu'il comprend un terminal de paiement mobile et ladite trappe, ledit dispositif étant apte à adopter au moins deux configurations :
- une configuration d'assemblage, selon laquelle ladite trappe est agencée de manière amovible sur ledit terminal de paiement, et ferme l'accès à un logement de maintien d'un terminal de communication,
- une configuration de verrouillage selon laquelle ladite trappe est verrouillée sur ledit terminal de paiement via ledit dispositif de verrouillage de ladite trappe.

### 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1 illustre, selon une vue de face, la partie supérieure d'un dispositif de paiement selon un mode de réalisation particulier de la divulgation ;
- la figure 2 illustre, selon une vue en perspective, la paroi extérieure d'une trappe selon un mode de réalisation particulier de la divulgation ;
- la figure 3a illustre, selon une vue en perspective, l'intérieur d'une trappe en configuration de déverrouillage, selon un mode de réalisation particulier de la divulgation ;
- la figure 3b illustre, selon une vue en perspective, le détail d'une partie de verrouillage d'une trappe agencée sur un terminal de paiement en configuration de déverrouillage, selon un mode de réalisation particulier de la divulgation ;
- la figure 4a illustre, selon une vue en perspective, l'intérieur d'une trappe en configuration de verrouillage, selon un mode de réalisation particulier de la divulgation ;
- la figure 4b illustre, selon une vue en perspective, le détail d'une partie de verrouillage d'une trappe agencée sur un terminal de paiement en configuration de verrouillage, selon un mode de réalisation particulier de la divulgation ;
- la figure 5 illustre, selon une vue en coupe de face, un dispositif de fixation amovible selon un mode de réalisation particulier de la divulgation.

### 5. Description

### 5.1. Principe général

La technique proposée se rapporte à une trappe destinée à équiper un dispositif de paiement mobile. Un tel dispositif de paiement comprend notamment un terminal de paiement et un logement apte à recevoir un terminal de communication. Ce terminal de communication permet ainsi au terminal de paiement de communiquer avec un serveur distant lors de la conduite d'une transaction bancaire.

La trappe est destinée à être agencée en vis-à-vis de l'accès au logement du terminal de communication, de manière à pouvoir en bloquer l'accès et ainsi, assurer une fixation sécurisée du terminal de communication au terminal de paiement. La trappe comprend notamment un dispositif de verrouillage apte à basculer dans une configuration de verrouillage, dans laquelle cette trappe ne peut pas être désolidarisée du terminal de paiement, sans la conduite par un utilisateur d'une action de déverrouillage distincte du processus de désassemblage.

D'une manière générale, l'invention se rapporte ainsi à une trappe qui comprend :
- une armature de blocage de l'accès au logement de maintien du terminal de communication; cette armature est utilisée pour refermer le logement d'insertion du terminal de communication.
- un dispositif de verrouillage qui comprend au moins :
   - une partie d'actionnement,
   - une partie de verrouillage,

La partie d'actionnement et la partie de verrouillage sont respectivement mobiles par rapport à l'armature entre une position de verrouillage et une position de déverrouillage.

Le dispositif de verrouillage est compact et se présente par exemple sous la forme d'une lame coulissante et déformable. Dans la position de verrouillage, la lame coulissante est déformée : les extrémités de la lame coulissante, qui comprennent des ergots de verrouillage, sont ainsi insérées dans des zones de préhension prévues à cet effet dans le boitier du dispositif. Dans la position de déverrouillage, la lame coulissante est plane : les extrémités de la lame coulissante sont libres et la trappe peut être ôtée du dispositif pour insérer ou retirer le terminal de communication. Par ailleurs, l'armature comprend des moyens pour faire coulisser la lame : il s'agit par exemple d'un orifice permettant d'insérer un trombone dans la partie d'actionnement. Ainsi, le déverrouillage de la trappe n'est pas trop aisé.

### 5.2. Description d'un mode de réalisation particulier de la divulgation

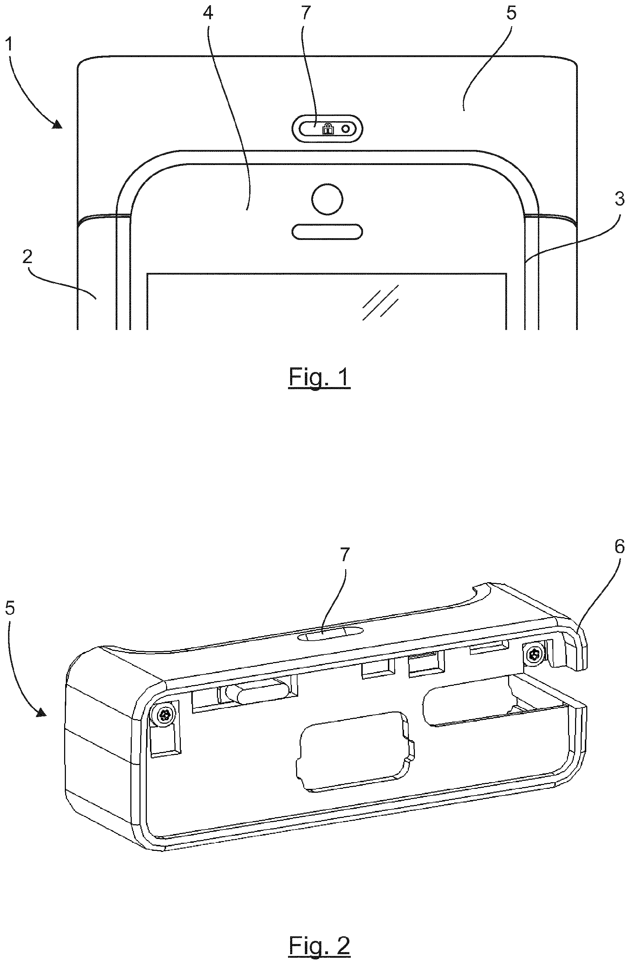

La figure 1 illustre la face avant de la partie supérieure d'un dispositif de paiement (1) (les notions de partie supérieure, partie inférieure, direction longitudinale, largeur, face avant et face arrière sont ici choisies arbitrairement pour les besoins de la description). Un terminal de paiement (2), ayant la forme générale d'un boîtier parallélépipédique rectangle réalisé par exemple en matière plastique, comprend un lecteur de carte bancaire, une interface homme-machine permettant d'effectuer une transaction, par exemple un écran tactile, et un logement prévu longitudinalement, c'est-à-dire sur la longueur du terminal de paiement (2). Ce logement présente une ouverture rectangulaire au niveau de la partie supérieure du terminal de paiement (2) et définit un logement de maintien (3) apte à recevoir un terminal de communication (4). Ce terminal de communication (4) peut donc être inséré par coulissement dans le logement de maintien (3) jusqu'à venir en contact, dans sa position de travail, avec la paroi du fond de ce logement de maintien (3).

Tel qu'illustré par les figures 1 et 2, une trappe (5), dont l'armature (6) présente une forme complémentaire de la partie supérieure du terminal de paiement (2), est apte à être agencée sur ce dernier pour fermer l'accès au logement de maintien (3) de façon sécurisée. Ainsi, même en cas de choc, de mouvement brusque, ou de chute, le terminal de communication (4) ne risque pas d'être désolidarisé du dispositif de paiement (1). Le logement de maintien (3) assure la protection du terminal de communication (4) contre les chocs mécaniques. L'armature (6) comprend au centre de sa face avant une lumière (7).

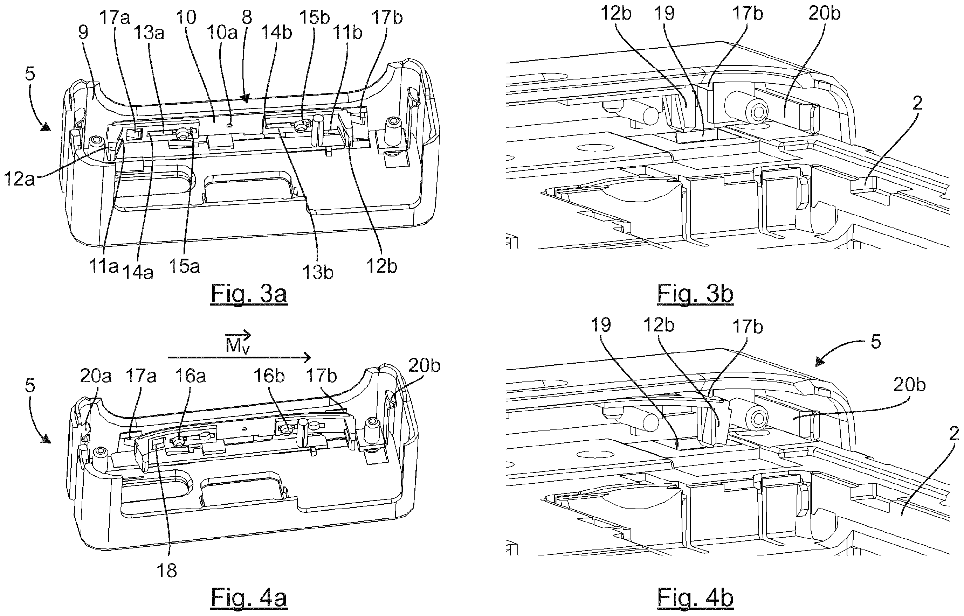

Les figures 3a et 4a illustrent un dispositif de verrouillage (8) agencé en affleurement avec la paroi (9) interne de la face avant de l'armature (6), selon la largeur de cette dernière. Ce dispositif de verrouillage (8) comprend une lame (10) de forme rectangulaire, ayant une fonction d'actionnement du dispositif de verrouillage (8), ainsi qu'un premier crochet (11a) et un deuxième crochet (11b), ayant chacun une fonction de verrouillage, et étant respectivement solidarisés à chacune des extrémités longitudinales de la lame (10). Les ergots de verrouillage (12a, 12b) de chacun de ces crochets (11a, 11b) s'étendent selon une direction distale de la paroi (9). Les crochets (11a, 11b) sont fixés de manière permanente à la lame (10), par exemple par collage. Selon d'autres modes de réalisation particuliers de la divulgation, la lame (10) et les crochets (11a, 11b) forment une unique pièce monobloc, produite par exemple via un procédé de moulage par injection. Le dispositif de verrouillage (8) comprend, au niveau de chaque zone de chevauchement de la lame (10) et d'un des crochets (11a, 11b), un trou oblong (13a, 13b) qui s'étend selon la direction longitudinale de la lame (10) entre une extrémité de verrouillage (14a, 14b) et une extrémité de déverrouillage (15a, 15b). L'armature (6) comprend deux protubérances (16a, 16b) qui forment saillies sur la paroi (9) et s'étendent respectivement au travers des trous oblongs (13a, 13b).

Le dispositif de verrouillage (8) est ainsi monté en coulissement par rapport à la paroi (9) entre une configuration de déverrouillage illustrée par les figures 3a et 3b, dans laquelle les protubérances (16a, 16b) sont agencées au niveau des extrémités de déverrouillage (15a, 15b) des trous oblongs (13a, 13b), et une configuration de verrouillage illustrée par les figures 4a et 4b, dans laquelle les protubérances (16a, 16b) sont agencées au niveau des extrémités de verrouillage (14a, 14b) des trous oblongs (13a, 13b).

La lame (10) est perforée à proximité de son centre, de manière à ce que l'orifice (10a) d'actionnement soit constamment en vis-à-vis de la lumière (7) de l'armature (6), quelle que soit la configuration adoptée par le dispositif de verrouillage (8). Selon ce mode de réalisation particulier, la forme de l'orifice (10a) est complémentaire de celle de la portion active d'un outil d'éjection de carte SIM, comme par exemple celui proposé par Apple®. En conséquence, seul un utilisateur disposant d'un tel outil est en mesure de prendre prise sur l'orifice (10a), et ainsi d'actionner le dispositif de verrouillage (8). Selon un autre mode de réalisation particulier non illustré, une protubérance formant saillie sur la paroi externe de l'armature au travers de la lumière (7), peut se substituer à l'orifice (10a). Un utilisateur est alors en mesure d'actionner directement le dispositif de verrouillage (8) via cette protubérance, sans avoir à recourir à un outil d'actionnement spécifique. En remplacement de cet outil d'éjection de carte SIM, il est également envisageable d'utiliser un trombone ou tout autre pointe métallique rigide dont le diamètre est inférieur ou égal au diamètre de l'orifice d'actionnement (10a).

La paroi (9) comprend une première portion biseautée (17a) apte à venir se loger dans une ouverture (18) prévue à cet effet dans le corps du premier crochet (11a), lorsque le dispositif de verrouillage (8) est en configuration de déverrouillage, tel qu'illustré par la figure 3a. Le biseau, c'est-à-dire la face inclinée de la portion biseautée, est alors en vis-à-vis du premier ergot de verrouillage (12a). La paroi (9) comprend également une deuxième portion biseautée (17b), orientée dans la même direction que la première, et agencée en regard de cette dernière par rapport à la lumière (7), à une distance sensiblement égale à la distance séparant le premier ergot de verrouillage (12a) et le deuxième ergot de verrouillage (12b).

Ainsi, lorsque le dispositif de verrouillage (8) est déplacé depuis une configuration de déverrouillage (illustrée par les figures 3a et 3b) vers une configuration de verrouillage (illustrée par les figures 4a et 4b), par coulissement du dispositif de verrouillage par rapport à la paroi (9) et selon une direction de mouvement de verrouillage (Mᵥ), le premier ergot de verrouillage (12a) et le deuxième ergot de verrouillage (12b) sont amenées en butée avec les biseaux respectifs de la première portion biseauté (17a) et de la deuxième portion biseautée (17b). Ces deux ergots de verrouillage (12a, 12b) sont alors déviés progressivement de leur trajectoire initiale (Mᵥ), selon une direction distale transverse à la paroi (9) pour atteindre un niveau d'éloignement distal maximal lorsque le dispositif de verrouillage (8) est en position de verrouillage. À contrario, le basculement du dispositif de verrouillage (8) depuis sa configuration de verrouillage vers sa configuration de déverrouillage provoque le désengagement des ergots de verrouillage (12a, 12b) des portions biseautées (17a, 17b) et le retour de l'ensemble du dispositif de verrouillage (8) en affleurement de la paroi (9).

Dans le cas où la trappe (5) est agencée sur le terminal de paiement (2), les ergots de verrouillage (12a, 12b) des crochets (11a, 11b) sont amenées à s'insérer, lors du passage du dispositif de verrouillage en configuration de verrouillage, dans des évidements (19) prévus à cet effet dans la face avant de la partie supérieure du terminal de paiement (2). Les ergots de verrouillage (12a, 12b) s'opposent alors à tout mouvement de la trappe (5) selon la direction longitudinale du dispositif de paiement (1). Lorsque le dispositif de verrouillage (8) est en configuration de verrouillage, l'agencement des ergots de verrouillage (12a, 12b) à l'intérieur de leurs évidements (19) respectifs empêche donc le désassemblage du dispositif de paiement (1).

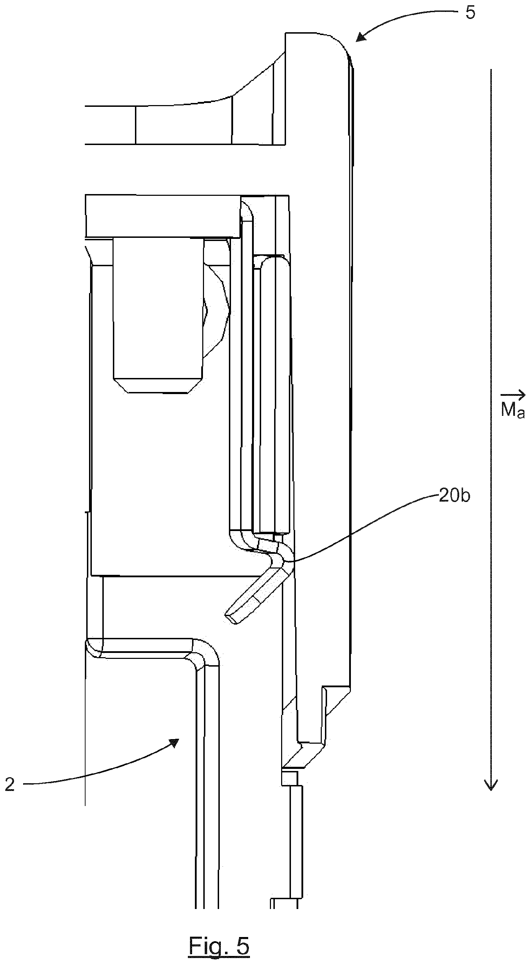

Tel qu'illustré par la figure 5, la trappe (5) comprend également deux lames recourbées (20a, 20b) flexibles qui s'étendent selon une direction longitudinale depuis la partie supérieure de l'armature (6), à proximité des parois latérales de cette dernière. Lors du processus d'assemblage de la trappe (5) et du terminal de paiement (2), ces lames recourbées (20a, 20b) sont amenées en butée avec des portions spécifiques du terminal de paiement (2), par un mouvement d'assemblage (Mₐ). Les forces de réaction exercées sur les lames recourbées (20a, 20b) conditionnent alors l'assemblage du dispositif de paiement (1) au dépassement par l'utilisateur d'un seuil de contrainte d'assemblage prédéfini. Dans le cas où ce seuil est dépassé, les lames recourbées (20a, 20b) basculent alors vers une position d'assemblage, par déformation élastique. La trappe (5) est alors agencée de manière amovible sur le terminal de paiement (2). Pour procéder au désassemblage du dispositif de paiement (1), l'utilisateur est contraint de fournir un effort selon une direction de désassemblage opposée à celle du mouvement (Mₐ), en dépassant un seuil de contrainte de désassemblage prédéfini. Le seuil de contrainte d'assemblage et le seuil de contrainte de désassemblage ne sont pas nécessairement égaux entre eux.

## Revendications

1. Trappe (5) pour dispositif de paiement (1) comprenant un terminal de paiement (2) et un logement de maintien (3) d'un terminal de communication (4), trappe (5) **caractérisée en ce qu'**elle comprend :
- une armature (6) de blocage d'un accès audit logement de maintien (3) d'un terminal de communication (4),
- un dispositif de verrouillage (8) comprenant au moins :
- une partie d'actionnement,
- une partie de verrouillage,
ladite partie d'actionnement et ladite partie de verrouillage étant respectivement mobiles par rapport à ladite armature (6) entre une position de verrouillage et une position de déverrouillage,
ladite partie d'actionnement et ladite partie de verrouillage sont mobiles selon des trajectoires non parallèles entre elles.
ladite armature (6) comprend une partie de déviation angulaire d'une portion dudit dispositif de verrouillage (8),
ladite partie de déviation angulaire comprend une portion biseautée (17a, 17b) destinée à former une butée avec une portion dudit dispositif de verrouillage (8),
ladite partie d'actionnement comprend une lame coulissante déformable dont les extrémités de la lame coulissante comprennent deux ergots de verrouillage destinés à être insérées dans des zones de préhension du dispositif de paiement, le premier ergot de verrouillage (12a) et le deuxième ergot de verrouillage (12b) sont destinés à être amenées en butée avec les biseaux respectifs de la première portion biseauté (17a) et de la deuxième portion biseautée (17b),

2. Trappe (5) selon la revendication 1, **caractérisée en ce que** ladite partie de déviation angulaire forme saillie sur une paroi interne de ladite armature (6).

3. Trappe (5) selon l'une des revendications 1 à 2, **caractérisée en ce que** ladite partie d'actionnement comprend un orifice (10a) destiné à recevoir un élément d'actionnement de forme complémentaire.

4. Trappe (5) selon l'une des revendications 1 à 3, **caractérisée en ce que** ladite partie de verrouillage comprend un ergot de verrouillage (12a, 12b), destiné à être inséré dans un évidement (19) de forme complémentaire ménagé dans ledit terminal de paiement (2).

5. Trappe (5) selon l'une des revendications 1 à 4, **caractérisée en ce que** ledit dispositif de verrouillage (8) comprend une pluralité de parties de verrouillage.

6. Trappe (5) selon l'une des revendications 1 à 5, **caractérisée en ce que** ledit dispositif de verrouillage (8) comprend une pièce mécanique monobloc comprenant ladite partie d'actionnement et ladite partie de verrouillage.

7. Dispositif de paiement (1) **caractérisé en ce qu'**il comprend un terminal de paiement (2) mobile et une trappe (5) selon l'une des revendications 1 à 6, ledit dispositif étant apte à adopter au moins deux configurations :
- une configuration d'assemblage, selon laquelle ladite trappe (5) est agencée de manière amovible sur ledit terminal de paiement (2), et ferme l'accès à un logement de maintien (3) d'un terminal de communication (4),
- une configuration de verrouillage selon laquelle ladite trappe (5) est verrouillée sur ledit terminal de paiement (2) via ledit dispositif de verrouillage (8) de ladite trappe (5).

## Patentansprüche

1. Klappe (5) für eine Zahlungsvorrichtung (1), umfassend ein Zahlungsterminal (2) und einen Wartungsraum (3) eines Kommunikationsendgeräts (4), Klappe (5), die **dadurch gekennzeichnet ist, dass** sie aufweist:
- eine Bewehrung (6) zum Blockieren eines Zugangs zu dem Wartungsraum (3) eines Kommunikationsendgeräts (4),
- eine Verriegelungsvorrichtung (8), umfassend mindestens:
- einen Betätigungsteil,
- einen Verriegelungsteil,
wobei der Betätigungsteil und der Verriegelungsteil jeweils gegenüber der Bewehrung (6) zwischen einer Verriegelungsposition und einer Entriegelungsposition beweglich sind,
der Betätigungsteil und der Verriegelungsteil sind gemäß Bahnen, die nicht zueinander parallel sind, beweglich,
die Bewehrung (6) weist einen Winkelabweichungsteil eines Abschnitts der Verriegelungsvorrichtung (8) auf,
der Winkelabweichungsteil weist einen abgeschrägten Abschnitt (17a, 17b) auf, der dazu bestimmt ist, einen Anschlag mit einem Abschnitt der Verriegelungsvorrichtung (8) zu bilden,
der Betätigungsteil weist eine verformbare gleitende Klinge auf, wovon die Enden der Gleitklinge zwei Verriegelungsnasen aufweisen, die dazu bestimmt sind, in Greifbereiche der Zahlungsvorrichtung eingefügt zu werden,
die erste Verriegelungsnase (12a) und die zweite Verriegelungsnase (12b) sind dazu bestimmt, mit den jeweiligen Abschrägungen des ersten abgeschrägten Abschnitts (17a) und des zweiten abgeschrägten Abschnitts (17b) in Anschlag gebracht zu werden.

2. Klappe (5) nach Anspruch 1, **dadurch gekennzeichnet, dass** der Winkelabweichungsteil an einer Innenwand der Armatur (6) einen Vorsprung bildet.

3. Klappe (5) nach einem der Ansprüche 1 bis 2, **dadurch gekennzeichnet, dass** der Betätigungsteil eine Öffnung (10a) aufweist, die dazu bestimmt ist, ein Betätigungselement von komplementärer Form aufzunehmen.

4. Klappe (5) nach einem der Ansprüche 1 bis 3, **dadurch gekennzeichnet, dass** der Verriegelungsteil eine Verriegelungsnase (12a, 12b) aufweist, die dazu bestimmt ist, in eine Ausnehmung (19) von komplementärer Form eingefügt zu werden, die in dem Zahlungsterminal (2) ausgebildet ist.

5. Klappe (5) nach einem der Ansprüche 1 bis 4, **dadurch gekennzeichnet, dass** die Verriegelungsvorrichtung (8) mehrere Verriegelungsteile aufweist.

6. Klappe (5) nach einem der Ansprüche 1 bis 5, **dadurch gekennzeichnet, dass** die Verriegelungsvorrichtung (8) ein einteiliges mechanisches Bauteil aufweist, das den Betätigungsteil und den Verriegelungsteil aufweist.

7. Zahlungsvorrichtung (1), **dadurch gekennzeichnet, dass** sie ein bewegliches Zahlungsterminal (2) und eine Klappe (5) nach einem der Ansprüche 1 bis 6 aufweist, wobei die Vorrichtung geeignet ist, mindestens zwei Konfigurationen einzunehmen:
- eine Montagekonfiguration, wobei die Klappe (5) abnehmbar auf dem Zahlungsterminal (2) angeordnet ist und den Zugang zu einem Wartungsraum (3) eines Kommunikationsendgeräts (4) schließt,
- eine Verriegelungskonfiguration, wobei die Klappe (5) auf dem Zahlungsterminal (2) über die Verriegelungsvorrichtung (8) der Klappe (5) verriegelt ist.

## Claims

1. Flap (5) for a payment device (1) comprising a payment terminal (2) and a housing (3) for holding a communication terminal (4), a flap (5) **characterised in that** it comprises:
- a framework (6) for blocking access to said housing (3) for holding a communication terminal (4),
- a locking device (8) comprising at least:
-- an actuating part,
-- a locking part,
said actuating part and said locking part being respectively movable with respect to said framework (6) between a locking position and an unlocking position, said actuating part is able to move slidably with respect to said framework (6), said actuating part and said locking part are able to move on paths not parallel to each other, said framework (6) comprises a part for angular deviation of a portion of said locking device (8),
said angular deviation part comprises a bevelled portion (17a, 17b) intended to form a stop with a portion of said locking device (8),
said actuating portion comprises a deformable sliding blade whose ends of the sliding blade comprise two locking lugs intended to be inserted into gripping areas of the payment device, the first locking lug (12a) and the second locking lug (12b) are intended to abut with the respective bevels of the first bevelled portion (17a) and the second bevelled portion (17b).

2. Flap (5) according to claim 1, **characterised in that** said angular deviation part forms a projection on an internal wall of said framework (6).

3. Flap (5) according to one of claims 1 to 2, **characterised in that** said actuating part comprises an orifice (10a) intended to receive an actuating element of complementary shape.

4. Flap (5) according to one of claims 1 to 3, **characterised in that** said locking part comprises a locking lug (12a, 12b) intended to be inserted in a recess (19) with a complementary shape formed in said payment terminal (2).

5. Flap (5) according to one of claims 1 to 4, **characterised in that** said locking device (8) comprises a plurality of locking parts.

6. Flap (5) according to one of claims 1 to 6, **characterised in that** said locking device (8) comprises a single-piece mechanical piece comprising said actuating part and said locking part.

7. Payment device (1) **characterised in that** it comprises a mobile payment terminal (2) and a flap (5) according to one of claims 1 to 6, said device being able to adopt at least two configurations:
- an assembly configuration, in which said flap (5) is arranged removably on said payment terminal (2) and closes off access to a housing (3) for holding a communication terminal (4),
- a locking configuration in which said flap (5) is locked on said payment terminal (2) via said locking device (8) of said flap (5).
